# EUROPÄISCHE PATENTANMELDUNG

(11) **EP 0 703 313 A1**
(43) Veröffentlichungstag der Anmeldung: **27.03.1996**
(21) Anmeldenummer: 95114012.8
(22) Anmeldetag: 07.09.1995
(51) Int. Cl.: D06P 1/54, D06P 1/52, C08G 18/12, C08G 18/08

(54) **Vernetzer für Textildruck-Bindemittel**

(30) Priorität: 20.09.1994 DE 4433437
(71) Anmelder: BAYER AG, D-51368 Leverkusen (DE)
(72) Erfinder: Reiff, Helmut, Dr., D-51375 Leverkusen (DE); Wigger, Herbert, Dipl.-Ing, D-51371 Leverkusen (DE); Gehling, Matthias, Dr., D-42799 Leichlingen (DE); Passon, Karl-Heinz, Dr., D-51375 Leverkusen (DE)

(57) **Zusammenfassung**

Blockierte Polyisocyanate, die ionische Gruppen und Polyalkylenoxideinheiten enthalten, eignen sich hervorragend als Vernetzer für im Textildruck verwendete organische Bindemittel. Druckpasten, die solche blockierten Polyisocyanate enthalten, sind lagerstabil und führen zu Drucken mit hohen Echtheiten.

## Beschreibung

Die vorliegende Erfindung betrifft die Verwendung blockierter spezieller Polyisocyanate als Vernetzer für im Textildruck verwendete organische Bindemittel.

In der Textildruckindustrie ist die Verwendung von fremdvernetzbaren filmbildenden Bindemitteln, z.B. solchen auf Polyacrylat- oder Butadien/Acrylnitril-Copolymerisat-Basis, weit verbreitet. Die Mischungen aus Bindemittel und Pigment enthalten üblicherweise zusätzlich reaktive Verbindungen, die nach dem Druckvorgang das Bindemittel bei höherer Temperatur vernetzen und dadurch den Druck fixieren können. Erst diese Fixierung führt zur gewünschten Wasserechtheit, die z.B. beim Waschen der bedruckten Textilien wichtig ist. (Der Begriff "Pigmente" umfaßt im Sinne der Erfindung auch Farbstoffe).

Als Vernetzer für die in Textildruckpasten verwendeten Bindemitteln werden in der Praxis immer noch Melamin/Formaldehyd-Kondensationsprodukte eingesetzt, die erst oberhalb von etwa 120°C Vernetzungsreaktionen eingehen. Gemäß W. Berlenbach in Ullmanns Encyklopädie der technischen Chemie, 4. Aufl., Bd. 22, S. 629, Verlag Chemie, Weinheim 1982 wird die Vernetzung über N-Methylolgruppen des Bindemittels durch Säure katalysiert; man fixiert am besten mit trockener Heißluft mit Einwirkungszeiten von beispielsweise 5 bis 10 Minuten/140°C oder 30 bis 60 Sekunden/175°C.

In der DE-OS 35 29 530 werden Textildruckpasten vorgeschlagen, die in Wasser oder in organischen Lösungsmitteln dispergierte fremdvernetzbare Bindemittel und "desaktivierte", d.h. teilblockierte Polyisocyanate als Vernetzer enthalten. Dabei handelt es sich anspruchsgemäß um feste Polyisocyanate mit Schmelzpunkten über 40°C; beispielhaft verwendet wird dimeres Tolylendiisocyanat vom Schmelzpunkt 170°C.

Die DE-OS 31 09 978 beschreibt wäßrige Textildruckpasten, die filmbildende fremdvernetzbare Polymerisate als Bindemittel und NCO-Präpolymerisate als Vernetzer enthalten, wobei diese Präpolymerisate - verglichen mit niedermolekularen Polyisocyanaten - aufgrund ihrer höheren Molekulargewichte und ihres geringeren Gehalts an reaktiven Gruppen - den Druckpasten scheinbar eine höhere Topfzeit verleihen. Diese ist jedoch unter Praxisbedingungen nicht ausreichend; insbesondere sind die fertigen Druckpasten nicht lagerstabil.

Es wurde auch vorgeschlagen, Polyisocyanatgemische aus hydrophilierten Polyisocyanaten oder Carbodiimidgruppen aufweisende hydrophilierte Isocyanatderivate als Vernetzer für im Textildruck verwendete Bindemittel einzusetzen (DE-OS 42 17 716). Für Druckpasten auf Basis wäßriger Dispersionen ist allerdings auch hier die Lagerstabilität nicht ausreichend, weil durch die Reaktion freier Isocyanatgruppen mit Wasser ein laufender Verlust an Isocyanatgruppen stattfindet, was schließlich zu vernetzungsinaktiven Produkten führt.

Die beschriebenen Textildruckpasten des Standes der Technik sind mit verschiedenen Nachteilen behaftet: Entweder wird bei der Vernetzungsreaktion und - besonders unerwünscht - auch noch später beim Gebrauch der bedruckten Textilien Formaldeyhd abgegeben oder die Zahl der für die Vernetzung zur Verfügung stehenden reaktiven Gruppen läßt sich schwer steuern oder der Vernetzer ist nur mit Mühe dispergierbar.

Aufgabe der Erfindung war es, insbesondere aus ökologischen und hygienischen Gründen Formaldehyd-freie Vernetzer für lagerstabile Druckpasten bereitzustellen, die zu Textildrucken hoher Echtheit verarbeitet werden können. In diesem Zusammenhang bedeutet "Formaldehyd-frei" den fehlenden Nachteil, im Laufe der Zeit Formaldehyd abzuspalten, wie dies Methylolgruppen-haltige Produkte unerwünschterweise tun. Mit "lagerstabil" im Sinne der Erfindung ist nicht nur gemeint, daß sich die Dispersionen nicht entmischen sollen, sondern vor allem auch, daß die Vernetzer während der Lagerung ihre Reaktivität nicht einbüßen und deswegen nach Lagerung zu Drucken mit unverminderten hervorragenden Echtheiten führen.

Überraschenderweise wurde nun gefunden, daß die Aufgabe der Erfindung durch spezielle blockierte Polyisocyanate gelöst wird: Es werden Druckpasten mit Lagerstabilitäten von über 4 Wochen und Drucke mit hohen Trocken- und Naßreibechtheiten (über 100 Bürstenwäschen) zugänglich.

Gegenstand der Erfindung ist also die Verwendung blockierter Polyisocyanate mit einem mittleren Molekulargewicht von 800 bis 25.000, vorzugsweise 1.000 bis 10.000, und einem Gehalt an
- blockierten Isocyanatgruppen, berechnet als freies NCO und bezogen auf unblockiertes Polyisocyanat (d.h. Polyisocyanat vor der Blockierung) entsprechend einem NCO-Gehalt von 5 bis 20, vorzugsweise 10 bis 20 Gew.-%,
- ionischen Gruppen von 1 bis 75, vorzugsweise 2 bis 25 Milliäquivalenten (meq) pro 100 g blockiertem Polyisocyanat und
- Polyalkylenoxideinheiten von 1 bis 20, vorzugsweise 1 bis 10 Gew.-%, bezogen auf blockiertes Polyisocyanat, erhältlich durch Umsetzung
   a) organischer Polyisocyanate,
   b) NCO-reaktiver Verbindungen enthaltend (potentielle) ionische Gruppen,
   c) Polyalkylenether,
   d) NCO-Blockierungsmittel und gegebenenfalls
   e) weiterer, von b), c) und d) verschiedener NCO-reaktiver Verbindungen,
als Vernetzer für im Textildruck verwendete organische Bindemittel.

Blockierte Polyisocyanate mit eingebauten Polyalkylenoxideinheiten und/oder ionischen Gruppen sind aufgrund ihrer Hydrophilie in Wasser dispergierbar und können deshalb aus wäßriger Phase verarbeitet werden. Sie sind wärmehärtbar, da bei Erreichen der Rückspalttemperatur unter Abgabe des Blockierungsmittels freie Isocyanatgruppen entstehen, die mit Isocyanat-reaktiven Verbindungen (also Verbindungen, die Zerewittinoff-aktive Wasserstoffatome enthalten) zu reagieren vermögen.

Die Herstellung dieser Polyisocyanatgemische kann auf an sich bekannte Weise durch Umsetzung einer Polyisocyanatkomponente a) mit einer (mittleren) NCO-Funktionalität von 2,1 bis 4,4, vorzugsweise 2,3 bis 4,3, bestehend aus mindestens einem Polyisocyanat mit ausschließlich (cyclo)aliphatisch gebundenen Isocyanatgruppen mit einem ein- oder mehrwertigen, im statistischen Mittel von 5 bis 70 Ethylenoxideinheiten aufweisenden Polyalkylenoxidpolyetheralkohol c) und/oder mit NCO-reaktiven Verbindungen b) enthaltend (potentielle) ionische Gruppen unter Einhaltung eines NCO/OH-Äquivalentverhältnisses von vorzugsweise 4:1 bis ca. 100:1 erfolgen, wobei im übrigen Art und Mengenverhältnisse der genannten Ausgangskomponenten so gewählt werden, daß die resultierenden Umsetzungsprodukte den obengenannten Bedingungen entsprechen.

Die Polyisocyanatkomponente a) umfaßt beliebige, durch Modifizierung einfacher (cyclo)aliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-OS 1 670 666, 3 700 209 und 3 900 053 oder den EP-A 336 205 und 339 396 beschrieben sind. Besonders bevorzugt sind solche Polyisocyanatkomponenten a), die weniger als 1, vorzugsweise weniger als 0,5 Gew.-% monomeres Isocyanat enthalten.

Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexylmethan oder beliebige Gemische solcher Diisocyanate.

Bevorzugt handelt es sich bei den verwendeten Polyisocyanaten a) um handelsübliche Produkte auf Basis von biuretisiertem Hexamethylendiisocyanat.

Weiterhin bevorzugt handelt es sich bei der Polyisocyanatkomponente a) um im wesentlichen aus trimerem 1,6-Diisocyanatohexan und gegebenenfalls dimerem 1,6-Diisocyanatohexan bestehenden Isocyanuratgruppen und gegebenenfalls Uretdiongruppen aufweisende Polyisocyanatgemische mit einem NCO-Gehalt von 19 bis 24 Gew.-%. Besonders bevorzugt werden als Komponente a) die entsprechenden, weitgehend Uretdiongruppen-freien, Isocyanuratgruppen aufweisenden Polyisocyanate des genannten NCO-Gehalts eingesetzt, wie sie durch an sich bekannte, katalytische Trimerisierung und unter Isocyanuratbildung von 1,6-Diisocyanatohexan erhalten werden und die vorzugsweise eine (mittlere) NCO-Funktionalität von 3,2 bis 4,2 aufweisen. Auch solche Produkte sind handelsüblich.

Generell können als Aufbaukomponenten (b) für das Einbringen ionischer Gruppen Verbindungen eingesetzt werden, die pro Molekül neben mindestens einer NCO-reaktiven Gruppe noch mindestens eine kationische oder anionische Gruppe (wie z.B. Ammonium-, Phosphonium-, Sulfonium-, Carboxylat-, Sulfonat-, Phosphat-, Phosphonat- oder Phosphinatgruppe) enthalten. Als Aufbaukomponenten (b) für das Einbringen potentiell ionischer Gruppen eignen sich Verbindungen, die pro Molekül neben mindestens einer NCO-reaktiven Gruppe mindestens eine zur Bildung einer ionischen Gruppe befähigte Gruppe enthalten. Solche potentiell ionischen Gruppen sind beispielsweise Amino-, Phosphano-, Thio-, Carboxyl-, Sulfo-, Phosphonsäure-, Phosphorsäure- und Phosphinsäuregruppen.

Bevorzugte Komponenten (b) sind also vor allem:
1. Verbindungen, die basische mit wässrigen Säuren neutralisierbare oder quaternierbare tertiäre Aminogruppen aufweisen:
   a) einwertige Alkohole, insbesondere alkoxylierte aliphatische, cycloaliphatische, aromatische und heterocyclische, sekündäre Amine, z.B. N,N-Dimethylethanolamin, N,N-Diethylethanolamin und N,N-Dibutylethanolamin, ferner 1-Dimethylamino-propanol-(2), N-Methyl-N-β-hydroxyethyl-anilin, N-Methyl-N-β-hydroxypropyl-anilin, N-Ethyl-N-β-hydroxyethyl-anilin, N-Butyl-N-β-hydroxyethyl-anilin, N-Oxethylpiperidin, N-Oxethylmorpholin, α-Hydroxyamyl-pyridin und γ-Hydroxyethyl-chinolin,
   b) Diole und Triole, insbesondere alkoxylierte aliphatische, cycloaliphatische, aromatische und heterocyclische primäre Amine, z.B. N-Methyldiethanolamin, N-Butyldiethanolamin, N-Oleyldiethanolamin, N-Cyclohexyldiethanolamin, N-Methyldiisopropanolamin, N-Cyclohexyldiethanolamin, N-Methyldiisopropanolamin, N-Cyclohexyldiethanolamin, N,N-Dioxyethylanilin, N,N-Dioxyethyl-m-toluidin, N,N-Dioxyethyl-p-toluidin, N,N-Dioxypropylnaphthylamin, Dioxyethylpiperazin, polyethoxyliertes Butyldiethanolamin, polypropoxyliertes Methyldiethanolamin (wobei im Falle der polyalkoxylierten Produkte das mittlere Molekulargewicht 250 bis 3000 beträgt), Tris-[2-hydroxypropyl-(1)]-amin, N,N'-Dimethyl-N,N'-bis-oxyethylhydrazin und N,N'-Dimethyl-N,N'-bis-oxypropylethylendiamin,
   c) Aminoalkohole, erhalten z.B. durch Hydrierung von Additionsprodukten von Alkylenoxyd und Acrylnitril an primäre Amine, z.B. N-Methyl-N-(3-amino-propyl)-ethanolamin, N-Cyclohexyl-N-(3-amino-propyl)-propanol-(2)-amin, N,N-Bis-(3-aminopropyl)-ethanolamin und N-(3-Aminopropyl)-diethanolamin,
   d) Amine, z.B. N,N-Dimethyl-ethylendiamin, 1-Diethylamino-4-aminopentan, α-Aminopyridin, 3-Amino-N-ethyl-carbazol, N,N-Dimethylpropylendiamin, N-Aminopropyl-piperidin, N-Aminopropylmorpholin, N-Aminopropylethylenimin und 1,3-Bis-piperidino-2-aminopropan,
   e) Diamine, Triamine, insbesondere durch Hydrierung von Anlagerungsprodukten von Acrylnitril an primäre und sekundäre Amine, z.B. Bis-(3-aminopropyl)-methylamin, Bis-(3-aminopropyl)-cyclohexylamin, Bis-(3-aminopropyl)-anilin, Bis-(3-aminopropyl)-toluidin, Diaminocarbazol, Bis-(aminopropoxyethyl)-butylamin und Tris-(aminopropyl)-amin;
2. Verbindungen, die zur Salzbildung befähigte Carboxyl- oder Hydroxylgruppen aufweisen:
   a) Hydroxy- und Mercapto-carbonsäuren, wie Glykolsäure, Thioglykolsäure, Milchsäure, Trichlormilchsäure, Dimethylolpropionsäure, Äpfelsäure, Dioxymaleinsäure, Dioxyfumarsäure, Weinsäure, Dioxyweinsäure, Schleimsäure, Zuckersäure, Zitronensäure, Salicylsäure, 2,6-Dioxybenzoesäure, Protocatechusäure, α-Resorcylsäure, β-Resorcylsäure, Hydrochinon-2,5-dicarbonsäure, 4-Hydroxyisophthalsäure, 4,6-Dihydroxyisophthalsäure, Oxyterephthalsäure, 5,6,7,8-Tetrahydro-naphthol-(2)-carbonsäue-(3), 1-Hydroxynaphthoesäure-(2), 2,8-Dihydroxynaphthoesäure-(3), β-Oxypropionsäure und m-Oxybenzoesäure,
   b) Polycarbonsäuren, wie Sulfondiessigsäure, Nitrilotriessigsäure, Ethylendiamintetraessigsäure, Diglykolsäure, Thiodiglykolsäure, Methylen-bis-thioglykolsäure, Malonsäure, Oxalsäure, Bernsteinsäure, Glutarsäure, Adipinsäure, Maleinsäure, Fumarsäure, Gallussäure, Phthalsäure, Tetrachlorphthalsäure, Isophthalsäure, Terephthalsäure, Naphthalintetracarbonsäure-(1,4,5,8), o-Tolylimidodiessigsäure, β-Naphthylimidodiessigsäure, Pyridin-dicarbonsäure und Dithiodipropionsäure,
   c) Aminocarbonsäuren, wie Oxalursäure, Anilidoessigsäure, 2-Hydroxycarbazol-carbonsäure-(3), Glycin, Sarkosin, Methionin, α-Alanin, β-Alanin, 6-Aminocapronsäure, 6-Benzylamino-2-chlorcapronsäure, 4-Aminobuttersäure, Asparaginsäure, Glutaminsäure, Histidin, Anthranilsäure, 2-Ethylaminobenzoesäure, N-(2-Carboxyphenyl)-aminoessigsäure, 2-(3'-Aminobenzolsulfonylamino)-benzoesäure, 3-Aminobenzoesäure, 4-Aminobenzoesäure, N-Phenylaminoessigsäure, 3,4-Diaminobenzoesäure, 5-Aminobenzoldicarbonsäure und 5-(4'-Aminobenzoyl-amino)-2-aminobenzoesäure,
   d) Hydroxy- und Carboxy-sulfonsäuren, wie 2-Hydroxyethansulfonsäure, Phenolsulfonsäure-(2), Phenolsulfonsäure-(3), Phenolsulfonsäure-(4), Phenoldisulfonsäure-(2,4), Sulfoessigsäure, m-Sulfobenzoesäure, p-Sulfobenzoesäure, Benzoesäure-(1)-disulfonsäure-(3,5), 2-Chlor-benzoesäure-(1)-sulfonsäure-(4), 2-Hydroxy-benzoesäure-(1)-sulfonsäure-(5), Naphthol-(1)-sulfonsäure, Naphthol-(1)-disulfonsäure, 8-Chlor-naphthol-(1)-disulfonsäure, Naphthol-(1)-trisulfonsäure, Naphthol-(2)-sulfonsäure-(1), Naphthol-(2)-trisulfonsäure, 1,7-Dihydroxynapthalinsullonsäure-(3), 1,8-Dihydroxynaphthalindisulfonsäure-(2,4), Chromotropsäure, 2-Hydroxynaphthoesäure-(3)-sulfonsäure-(6) und 2-Hydroxycarbazolsulfonsäure-(7), und
   e) Aminosulfonsäuren, wie Amidosulfonsäure, Hydroxylaminmonosulfonsäure, Hydrazindisulfonsäure, Sulfanilsäure, N-Phenylaminomethansulfonsäure, 4,6-Dichloranilin-sulfonsäure-(2), Phenylendiamin-(1,3)-disulfonsäure-(4,6), N-Acetylnaphthylamin-(1)-sulfonsäure-(3), Naphthylamin-(1)-sulfonsäure, Naphthylamin-(2)-sulfonsäure, Naphthylamindisulfonsäure, Naphthylamintrisulfonsäure, 4,4'-Di-(p-aminobenzoylamino)-diphenylharnstoff-disulfonsäure-(3,3'), Phenylhydrazindisulfonsäure-(2,5), 2,3-Dimethyl-4-amino-azobenzoldisulfonsäure-(4',5), 4'-Aminostilbendisulfonsäure-(2,2')-〈4-azo-4〉anisol, Carbazoldisulfonsäure-(2,7), Taurin, Methyltaurin, Butyltaurin, 3-Aminobenzoesäure-(1)-sulfonsäure-(5), 3-Aminotoluol-N-methansulfonsäure, 6-Nitro-1,3-dimethylbenzol-4-sulfaminsäure, 4,6-Diaminobenzoldisulfonsäure-(1,3), 2,4-Diaminotoluolsulfonsäure-(5), 4,4'-Diaminodiphenyldisulfonsäure-(2,2'), 2-Aminophenolsulfonsäure-(4), 4,4'-Diaminodiphenylethersulfonsäure-(2), 2-Amino-anisol-N-methansulfonsäure, 2-Amino-diphenylaminsulfonsäure.
      Als salzbildende Mittel kommen für die Gruppe 1 anorganische und organische Säuren sowie Verbindungen mit reaktiven Halogenatomen und die entsprechenden Ester starker Säuren in Betracht. Einige Beispiele sind:
      Salzsäure, Salpetersäure, unterphosphorige Säure, Amidosulfonsäure, Hydroxylaminmonosulfonsäure, Ameisensäure, Essigsäure, Glykolsäure, Milchsäure, Chloressigsäure, Bromessigsäureethylester; Methylchlorid, Butylbromid, Dimethylsulfat, Diethylsulfat, Benzylchlorid, p-Toluolsulfonsäuremethylester, Methylbromid, Ethylenchlorhydrin, Ethylenbromhydrin, Glycerin-α-bromhydrin, Chloressigester, Chloracetamid, Bromacetamid, Dibromethan, Chlorbrombutan und Dibrombutan.

Für die Verbindungen der Gruppe 2 eignen sich anorganische und organische Basen als Salzbildner, z.B. Natriumhydroxid, Kaliumhydroxid, Kaliumcarbonat, Natriumhydrogencarbonat, Ammoniak, primäre, sekundäre und tertiäre Amine.

Schließlich können auch organische Phosphorverbindungen als Verbindungen, die zur Salzbildung fähig sind, verwendet werden, und zwar sowohl einbaufähige basische Phosphine, wie Diethyl-β-hydroxyethylphosphin, Methyl-β-hydroxyethylphosphin und Tris-β-hydroxymethylphosphin, als auch Bis-(α-hydroxyisopropyl)phosphinsäure, Hydroxyalkanphosphonsäure und Phosphorsäure-bis-glykolester.

Die Umsetzung der Reaktionsteilnehmer kann mit oder auch ohne Lösungsmittel erfolgen.

Bevorzugte Komponenten (b) sind also Polyhydroxycarbon- und -sulfonsäuren, Polyaminocarbon- und -sulfonsäuren und die Salze dieser Verbindungen (vor allem Alkali- und Ammoniumsalze, insbesondere die Natrium- und Kaliumsalze).

Unter den Komponenten (b) ist insbesondere die Klasse der Sulfonatdiole bevorzugt; geeignete Verbindungen dieser Klasse sind beispielsweise in der DE-OS 24 46 440 beschrieben. Sie entsprechen im allgemeinen der Formel 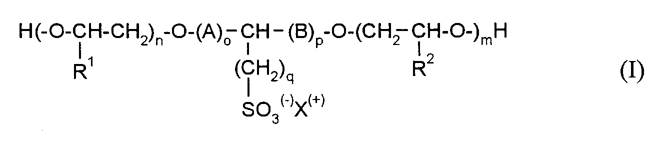
worin
- A und B: für gleiche oder verschiedene zweiwertige aliphatische Kohlenwasserstoffreste mit 1 bis 6 Kohlenstoffatomen stehen,
- R¹ und R²: unabhängig voneinander für Wasserstoff, einen aliphatischen Kohlenwasserstoffrest mit 1 bis 4 Kohlenstoffatomen oder einen Phenylrest stehen,
- X⁽⁺⁾: für ein Alkalimetallkation oder eine gegebenenfalls substituierte Ammoniumgruppe steht,
- n und m: unabhängig voneinander für Null oder Zahlen von 1 bis 30 stehen,
- o und p: für jeweils Null oder 1 stehen und
- q: für Null, 1 oder 2 steht.

Bei der Komponente c) handelt es sich um ein- oder mehrwertige im statistischen Mittel 5 bis 70, vorzugsweise 6 bis 60 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Zur Herstellung der Polyetheralkohole c) können beliebige ein- oder mehrwertige Alkohole des Molekulargewichtsbereichs 32 bis 150, wie sie beispielsweise auch gemäß EP-A 206 059 Verwendung finden, als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol, Ethanol, Propanol und Butanol.

Bevorzugte Polyetheralkohole c) zur Herstellung der erfindungsgemäß zu verwendenden Polyisocyanatgemische sind monofunktionelle, auf einem aliphatischen, 1 bis 8 Kohlenstoffatome aufweisenden Alkohol gestartete Polyalkylenoxidpolyether, die im statistischen Mittel 6 bis 60 Ethylenoxideinheiten enthalten. Besonders bevorzugte Polyetheralkohole c) sind reine Polyethylenglykolmonomethyletheralkohole, die im statistischen Mittel 7 bis 20 Ethylenoxideinheiten aufweisen.

Die erfindungsgemäßen blockierten Polyisocyanate weisen vorzugsweise einen Gehalt an eingebauten Polyalkylenethergruppen, berechnet als wiederkehrende Alkylenoxygruppen -0-Alkylen-, von 3 bis 25 Gew.-%, bezogen auf blockiertes Polyisocyanat, auf.

Vorzugsweise enthalten die Polyalkylenethergruppen zu 50 bis 100 Gew.-% Ethylenoxideinheiten und neben diesen vorzugsweise ausschließlich Propylenoxideinheiten. Bevorzugt sind dementsprechend also Ethylenoxid-Polyether und Ethylenoxid/Propylenoxid-Mischpolyether mit einem überwiegenden Gewichtsanteil an Ethylenoxideinheiten. Reine Ethylenoxid-Polyether sind bevorzugt. Die eingebauten Polyethylenoxidblöcke können ein mittleres Molekulargewicht von 300 bis 6000, vorzugsweise von 500 bis 3000, besitzen.

Mögliche Komponenten (e) für die Herstellung der erfindungsgemäßen blockierten Polyisocyanate umfassen von (b) und (c) verschiedene NCO-reaktive Verbindungen, beispielsweise Polyhydroxylverbindungen, die pro Molekül 2 bis 8, vorzugsweise 2 oder 3 Hydroxylgruppen aufweisen und ein (mittleres) Molekülargewicht von bis zu 10.000, vorzugsweise bis zu 6000, aufweisen. Dabei kommen sowohl niedermolekulare Polyhydroxylverbindungen mit Molekulargewichten von 62 bis 499 als auch höhermolekulare Polyhydroxylverbindungen mit mittleren Molekulargewichten von mindestens 500, vorzugsweise von mindestens 1000, in Betracht.

Niedermolekulare Polyhydroxylverbindungen ("Kettenverlängerungsmittel") umfassen die verschiedenartigsten Diole, wie beispielsweise
(i) Alkandiole wie Ethylenglykol, Propylenglykol-1,3 und Propylenglykol-1,2, Butandiol-1,4, Pentandiol-1,5, Dimethylpropandiol-1,3 und Hexandiol-1,6;
(ii) Etherdiole, die im Falle von Polyalkylenetherdiolen nicht mehr als 4 wiederkehrende Alkylenoxygruppen enthalten, wie Diethylenglykol, Triethylenglykol oder 1,4-Phenylen-bis-(β-hydroxyethylether);
(iii) Esterdiole der Formeln

   HO-(C₂-C₆-Alkylen)-CO-O-(C₂-C₆-Alkylen)-OH und

   HO-(C₂-C₆-Alkylen)-O-CO-R-O-(C₂-C₆-Alkylen)-OH

   in denen
   - R: einen Alkylen- bzw. Arylenrest mit 1 bis 10, vorzugsweise 2 bis 6, C-Atomen,
   bedeutet,
   z.B. δ-Hydroxybutyl-ε-hydroxy-capronsäureester, ω-Hydroxyhexyl-γ-hydroxybuttersäureester, Adipinsäure-(β-hydroxyethyl)ester, Terephthalsäure-bis(β-hydroxyethyl)ester und α-Methyl-α-hydroxymethyl-propionsäure-neopentylglykolmonoester ("Esterdiol 204").

Als "Kettenverlängerungsmittel" können auch Polyamine, vorzugsweise aliphatische oder aromatische Diamine verwendet werden, beispielsweise Ethylendiamin, Propylendiamin-1,2 und -1,3, 1,4-Tetramethylendiamin, 1,6-Hexamethylendiamin, N,N'-Diisobutyl-1,6-hexamethylendiamin, 1,11-Undecamethylendiamin, Cyclohexan-1,3- und -1,4-diamin sowie deren Gemische, 1-Amino-3,3,5-trimethyl-5-aminomethylcyclohexan, 2,4-und 2,6-Hexahydrotoluylendiamin sowie deren Gemische, Perhydro-2,4'- und -4,4'-diaminodiphenylmethan und dessen 3,3'-Dimethylderivat und Bis-(3-aminopropyl)-methylamin; p-Xylylendiamin, Bis-anthranilsäureester gemäß den DE-OS 20 40 644 und 21 60 590, 3,5- und 2,4-Diaminobenzoesäureester gemäß DE-OS 20 25 900, die in den DE-OS 18 03 635, 20 40 650 und 21 60 589 beschriebenen estergruppenhaltigen Diamine, sowie 3,3'-Dichlor-4,4'-diamino-diphenylmethan, Toluylendiamin, 4,4'-Diaminodiphenylmethan und 4,4'-Diaminodiphenyldisulfid.

Als Diamine in diesem Sinne sind auch Hydrazin, Hydrazinhydrat und substituierte Hydrazine zu betrachten, wie z.B. Methylhydrazin, N,N'-Dimethylhydrazin und deren Homologe sowie Säuredihydrazide, z.B. Carbodihydrazid, Oxalsäuredihydrazid, die Dihydrazide von Malonsäure, Bernsteinsäure, Glutarsäure, Adipinsäure, β-Methyladipinsäure, Sebacinsäure, Hydracrylsäure und Terephthalsäure, Semicarbazido-alkylen-hydrazide, wie z.B. β-Semicarbazidopropionsäurehydrazid (DE-OS 17 70 591), Semicarbazidoalkylencarbazinester, wie z.B. 2-Semicarbazidoethylcarbazinester (DE-OS 19 18 504) oder auch Aminosemicarbazid-Verbindungen, wie z.B. β-Aminoethylsemicarbazido-carbonat (DE-OS 19 02 931).

Mögliche Komponenten (e) für die Herstellung der erfindungsgemäßen blockierten Polyisocyanate sind z.B. auch 3- und 4-wertige Alkohole, wie Glycerin, Trimethylolethan, -propan und -hexan sowie Pentaerythrit.

Weitere Komponenten (e) sind die in der Polyurethanchemie üblichen OH-, SH- und/oder NH-terminierten Polyester, Polycarbonate, Polyacetale wie beispielsweise einfache Polyesterdiole eines unter 2000 liegenden durchschnittlichen Molekulargewichts, beispielsweise hergestellt durch Umsetzung von Adipinsäure oder Phthalsäure mit überschüssigen Mengen an Alkandiolen wie Ethylenglykol, Tetramethylenglykol oder Hexamethylenglykol.

Es hat sich als vorteilhaft erwiesen, die Ausgangskomponenten für die Herstellung der erfindungsgemäßen blockierten Polyisocyanate so auszuwählen, daß verzweigte Produkte entstehen. Für die Zwecke der vorliegenden Erfindung vorteilhafte Produkte entstehen, wenn die Gesamtfunktionalität der erfindungsgemäßen Polyisocyanate über 2,0, vorzugsweise über 2,5, insbesondere 2,8 bis 4,0 beträgt. Der Begriff "Gesamtfunktionalität" im Sinne der Erfindung bedeutet die durchschnittliche Anzahl der (blockierten) Isocyanatgruppen pro Molekül. Man kann also beispielsweise Polyisocyanate (a) mit durchschnittlich mehr als 2,0, vorzugsweise mehr als 2,5, insbesondere 2,8 bis 4,0 Isocyanatgrupppen pro Molekül einsetzen, sofern man als Reaktionspartner Verbindungen mit 2 NCO-reaktiven Gruppen pro Molekül einsetzt. Da es für die Zwecke der Erfindung selbstverständlich unerheblich ist, auf welche Weise Verzweigungsstellen entstehen, kann man Isocyanate mit 3 oder mehr Isocyanatgruppen, wie die oben unter a) aufgezählten Triisocyanate einschließlich der aus Diisocyanaten zugänglichen Trimerisate, Biurete, Allophanate und Urethane, durch die äquivalente Menge polyfunktioneller NCO-reaktiver Verbindungen, wie z.B. Triole, ersetzen. Der Fachmann wird die Bedingungen so wählen, daß eine Gelierung zuverlässig vermieden wird.

Die für die Herstellung der erfindungsgemäßen blockierten Polyisocyanate brauchbaren nicht-blockierten Zwischenprodukte können hergestellt werden, indem man die Polyisocyanate (a) mit den Komponenten (b), (c) und gegebenenfalls (e) gleichzeitig oder in beliebiger Reihenfolge nacheinander umsetzt. Eine bevorzugte Reaktionstemperatur liegt bei 50 bis 120°C; die Reaktion ist im allgemeinen innerhalb 1 bis 3 Stunden abgeschlossen.

Geeignete Blockierungsmittel (d) sind insbesondere Verbindungen mit vorzugsweise einer gegenüber Isocyanatgruppen reaktionsfähigen Gruppe, die mit organischen Isocyanaten bei über 50°C, vorzugsweise zwischen 60 und 100°C, eine Additionsreaktion eingehen. Geeignete derartige Blockieiungsmittel sind z.B. sekundäre oder tertiäre Alkohole, wie Isopropanol oder tert.-Butanol, C-H-acide Verbindungen, wie z.B. Malonsäuredialkylester, Acetylaceton, Acetessigsäurealkylester, Oxime, wie z.B. Formaldoxim, Acetaldoxim, Methylethylketonoxim, Cyclohexanonoxim, Acetophenonoxim, Benzophenonoxim oder Diethylglyoxim, Lactame, wie z.B. ε-Caprolactam, ó-Valero-lactam, γ -Butyrolactam, Phenole, wie Phenol, o-Methylphenol, N-Alkylamide, wie z.B. N-Methyl-acetamid, Imide, wie Phthalimid, Imidazol und Triazol. Vorzugsweise werden erfindungsgemäß Methylethylketoxim, ε-Caprolactam und C-H-acide Verbindungen, wie z.B. Malonsäure-C₁-C₄-alkylester, insbesondere Malonsäurediethylester, Acetessigsäure-C₁-C₄-alkylester, insbesondere Acetessigsäureethylester, oder Acetylaceton eingesetzt. Ganz besonders bevorzugt kommen aliphatische Ketoxime mit 2 bis 10 C-Atomen als Blockierungsmittel zum Einsatz, wie beispielsweise Methylethylketoxim.

Zur Herstellung der erfindungsgemäßen blockierten Polyisocyanate werden die unblockierten Polyisocyanate der ersten Reaktionsstufe(n) vorzugsweise mit einer solchen Menge Blockierungsmittel zur Reaktion gebracht, die einem Äquivalentverhältnis von NCO-Gruppen: NCO-reaktive Gruppen (des Blockierungsmittels) von 1:0,95 bis 1:1,15, vorzugsweise 1:1 bis 1:1,1 entspricht. Diese Äquivalentverhältnisse schließen also auch die Möglichkeit, die NCO-Gruppen mit einer unteräquivalenten Menge Blockierungsmittel reagieren zu lassen und die verbleibenden NCO-Gruppen entweder dem Angriff des Wassers auszusetzen oder mit (vorzugsweise aminischen) Kettenverlängerern umzusetzen, ein. Bei Einsatz von aktiven Methylengruppen aufweisenden Blockierungsmitteln ist die Verwendung von basischen Katalysatoren, wie z.B. Diazabicyclooctan, Triethylamin, Alkalialkoholaten oder Alkaliphenolaten wie beispielsweise Natriumethylat oder Natriumphenolat vorteilhaft. Bei Verwendung von Blockierungsmitteln mit OH- oder NH-Gruppierungen kann die Katalyse der Blockierungsreaktion mit einem Metallsalz, wie beispielsweise Dibutylzinndilaurat oder Zinnoctoat, von Vorteil sein.

Die Durchführung des letzten Reaktionsschrittes ist denkbar einfach: Im Rahmen des bereits angegebenen Zeit-und Temperaturbereichs kann die Reaktion solange durchgeführt werden, bis alle NCO-Gruppen verbraucht sind.

Obwohl es oft von besonderem Vorteil ist, auf organische Lösungsmittel völlig zu verzichten, können bei der Herstellung der erfindungsgemäß zu verwendenden blockierten Polyisocyanate natürlich auch organische Lösungsmittel eingesetzt werden. Im Falle zähelastischer oder fester erfindungsgemäß zu verwendender blockierter Polyisocyanate ist die Mitverwendung organischer Lösungsmittel regelmäßig angebracht.

Bevorzugte organische Lösungsmittel umfassen unter anderem Ketone wie Aceton, Methylethylketon und Cyclohexanon, Ether wie Diethyl- und Dibutylether, Tetrahydrofuran und Dioxan, Ether und/oder Ester von Ethylenglykol und Propylenglykol wie Ethylenglykolmonomethyl- und -monoethylether, Ethylenglykolmonomethyl- und -monoethyletheracetat, C₂-C₄-Carbonsäure-C₁-C₆-alkylester wie Essigsäureethyl- und -butylester, Amide wie N,N-Dimethylformamid, N,N-Dimethylacetamid und N-Methylpyrrolidon, Sulfolan, N-Methyl-caprolactam, Propylenglykol-diacetat, Benzin, Aromaten wie Benzol, Toluol und Xylole. Die Verwendung organischer Lösungsmittel, die NCO-reaktive Gruppen enthalten, wie z.B. Methanol, Ethanol, n- oder Isopropanol, im Laufe der Herstellung der erfindungsgemäß zu verwendenden blockierten Polyisocyanate wird nicht empfohlen. Die organischen Lösungsmittel können, falls gewünscht, aus den erfindungsgemäß zu verwendenden blockierten Polyisocyanaten wieder entfernt werden, z.B. durch Destillation.

Die erfindungsgemäß zu verwendenden blockierten Polyisocyanate lassen sich hervorragend in stabile wäßrige Dispersionen überführen. Sie finden auch bevorzugt in dieser Form Verwendung. Der Gehalt dieser wäßrigen Dispersionen an erfindungsgemäß zu verwendendem blockierten Polyisocyanaten kann innerhalb weiter Grenzen schwanken und beträgt in der Regel 20 bis 80, vorzugsweise 25 bis 50 Gew.-%. Das Dispergieren der erfindungsgemäß zu verwendenden blockierten Polyisocyanate kann durch einfache Zugabe von Wasser unter Rühren erfolgen, kann aber selbstverständlich auch umgekehrt durch Zugabe des blockierten Polyisocyanat zu Wasser erfolgen. Die Vereinigung erfolgt zweckmäßigerweise unter Rühren. Der Dispergiervorgang kann in Abwesenheit oder in Gegenwart organischer, vorzugsweise wassermischbarer, Lösungsmittel erfolgen. Als solche organischen Lösungsmittel eignen sich die oben genannten Lösungsmittel und zusätzlich auch jene Verbindungen, die als Lösungsmittel wirken können und NCO-reaktive Gruppen tragen, wie z.B. Alkohole wie Methanol, Ethanol, n- und Isopropanol.

Die Verwendung - vorzugsweise wassermischbarer - organischer Lösungsmittel wird besonders dann bevorzugt, wenn die wäßrige Dispersion mehr als 50 Gew.-% erfindungsgemäß zu verwendendes blockiertes Polyisocyanat enthalten soll. So kann man beispielsweise nach dem letzten Reaktionsschritt das erfindungsgemäß zu verwendende blockierte Polyisocyanat in einem wasserverdünnbaren organischen Lösungsmittel wie Isopropanol bis zu einem Gehalt an erfindungsgemäß zu verwendenden blockiertem Polyisocyanat von 80 bis 95 Gew.-%, bezogen auf die Summe von organischem Lösungsmittel und erfindungsgemäß zu verwendendem blockiertem Polyisocyanat lösen; die erhaltene organische Lösung läßt sich dann mit Wasser weiter verdünnen.

Man kann auf die Verwendung organischer Lösungsmittel beim Dispergieren auch ganz verzichten, weil die erfindungsgemäß zu verwendenden blockierten Polyisocyanate mit Wasser meistens spontan Dispersionen bilden.

Die Temperatur beim Dispergieren kann im allgemeinen 20 bis 100, vorzugsweise 30 bis 80°C betragen. Die erhaltenen wäßrigen Dispersionen enthalten die erfindungsgemäß zu verwendenden blockierten Polyisocyanate im allgemeinen als Teilchen mit einem mittleren Durchmesser d₅₀ von 50 bis 800, vorzugsweise 100 bis 300 mµ.

Die als Gewichtsmittel bestimmten Molekulargewichte M_{w} liegen zwischen 800 und 25 000. Sie können gelchromatographisch (Polystyrol als Standard) bestimmt werden. Einzelheiten sind in Handbüchern der Polymeranalytik beschrieben.

Der mittlere Teilchendurchmesser d₅₀ ist der Durchmesser, oberhalb und unterhalb dessen jeweils 50 Gew.-% der Teilchen liegen. Er kann mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf H. Schuster, Angew. Makromolekulare Chemie 14 (1970), 111 - 129) bestimmt werden.

Wäßrige Dispersionen, welche die erfindungsgemäß zu verwendenden blockierten Polyisocyanate als disperse Phase enthalten, haben im allgemeinen bei Raumtemperatur eine Lagerstabilität von über 1 Jahr und bei 50°C eine Lagerstabilität von über 12 Wochen.

Als Bindemittel, die mit den erfindungsgemäß zu verwendenden Polyisocyanaten vernetzt werden können, eignen sich beispielsweise Polymerisate wie solche auf Basis von natürlichem oder synthetischem Kautschuk, Styrol/Butadien-Copolymerisate, Polymerisate des 2-Chlor-butadiens, Styrol/Acrylnitril-Copolymerisate, Polyethylen, chlorsulfoniertes oder chloriertes Polyethylen, Butadien/Acrylnitril-Copolymerisate, Butadien/Methacrylat-Copolymerisate, Polyacrylsäureester, PVC oder gegebenenfalls partiell verseifte Ethylen/Vinylacetat-Copolymerisate oder Polyadditionsverbindungen wie solche auf Polyurethanbasis - also Produkte, wie sie beispielsweise in Ullmanns Encyklopädie der technischen Chemie, 4. Aufl., Bd. 16, Verlag Chemie, Weinheim-New York 1978, S. 159 ff und in den dort beschriebenen Literaturstellen oder in den DE-OS 19 53 345, 19 53 348, 19 53 349 oder in der US-PS 2 939 013 beschrieben worden sind. Polyacrylat- und Polyurethanbindemittel sind besonders bevorzugt.

Pro 100 Gew.-Teile Bindemittel werden im allgemeinen 1 bis 25, vorzugsweise 2,5 bis 12,5 des erfindungsgemäß zu verwendenden Vernetzers eingesetzt. Dabei wird vorausgesetzt, daß die Bindemittel mindestens so viele NCO-reaktive Gruppen (vorzugsweise Hydroxylgruppen) enthalten, daß die blockierten Isocyanatgruppen des zugesetzten Vernetzers spätestens beim thermischen Fixieren vollständig abreagieren können.

Da die erfindungsgemäß zu verwendenden Vernetzer neben Hydroxylgruppen mit anderen Zerewittinoff-aktiven H-Atomen abzureagieren vermögen, ist es nicht erforderlich, daß die den Bindemitteln zugrundeliegenden Polymeren Hydroxylgruppen aufweisen. Auch Carboxyl-, Urethan-, Harnstoff-, Amin-, Amidgruppen etc. (s. Saunders-Frisch, "Polyurethanes" Part 1, Interscience Publ., New York 1962, S. 63 ff) sind einer Vernetzungsreaktion zugänglich. Bei der Vernetzung ist es generell nicht erforderlich - oft sogar nicht wünschenswert - alle der Vernetzung zugänglichen Gruppen abreagieren zu lassen. Die Vernetzungswirkung wird im allgemeinen lediglich phänomenologisch festgelegt: Die Erreichung einer gewissen Wasserunempfindlichkeit, Abriebfestigkeit etc. ohne zu starke Beeinträchtigung der elastischen Eigenschaften wird im allgemeinen mit den angegebenen 1 bis 25 Gewichtsteilen Vernetzer pro 100 Gewichtsteile Bindemittel erreicht.

Die für die Druckpasten zu verwendenden Bindemittel sind vorzugsweise frei von Perfluoralkylgruppen.

Die für die Textildruckpasten geeigneten Pigmente unterliegen praktisch keiner Beschränkung; sie können anorganischer oder organischer Natur sein. Geeignete organische Pigmente sind z.B. solche der Azo-, Anthrachinon-, Azoporphin-, Thioindigo-, Dioxazin-, Naphthalintetracarbonsäure- oder Perylentetracarbonsäurereihe sowie verlackte Farbstoffe wie Calcium-, Magnesium- oder Aluminiumlacke von Sulfonsäure- und/oder Carbonsäuregruppen enthaltenden Farbstoffen, von denen eine große Zahl beispielsweise aus Colour-Index, 2. Auflage bekannt ist. Geeignete anorganische Pigmente sind z.B. Zinksulfide, Titandioxide, Ultramarine, Eisenoxide, Nickel- und Chromverbindungen, Ruße, Siliciumdioxide und Aluminiumoxide.

Die Menge Pigment, bezogen auf die Summe Bindemittel + Vernetzer + Pigment, in den Textildruckpasten beträgt in der Regel 0,5 bis 50, vorzugsweise 5 bis 35 Gew.-%, bezogen auf die Summe von Bindemittel, Vernetzer und Pigment.

Die Bindemittel und Vernetzer können, wie üblich, in Wasser dispergiert werden, gegebenenfalls unter Verwendung organischer Lösungsmittel (so z.B. im sog. "Benzin-Emulsionsverfahren", wonach Öl-in-Wasser-Emulsionen entstehen). Aus Gründen der Umweltverträglichkeit wird allerdings die Verwendung benzinfreier Druckpasten bevorzugt. Beim Aufstellen der Rezeptur wird man zweckmäßigerweise auf Komponenten mit reaktiven Gruppen, die die Reaktion zwischen Bindemittel und Vernetzer stören könnten, verzichten.

Zur Herstellung der Druckpasten können selbstverständlich weitere Hilfsmittel, wie z.B. Emulgatoren, Verdicker, Verdunstungshemmer, Katalysatoren, Griffverbesserer, Antischaummittel eingesetzt werden.

Für die Verarbeitung der Textildruckpasten eignen sich die üblichen Methoden der Drucktechnik; vgl. z.B. Ullmanns Encyclopädie der technischen Chemie, 4. Aufl., Bd. 22, S. 565 ff. "Textildruck", Verlag Chemie, Weinheim 1982.

Die aufgebrachten Drucke werden bei erhöhten Temperaturen vernetzt, wobei die erfindungsgemäß zu verwendenden Vernetzer die Anwendung von Temperaturen ab 100°C gestatten, jedoch Temperaturen von 120 bis 170°C bevorzugt sind.

Die Abspalttemperatur kann durch geeignete Katalysatoren, wie organische Zinnverbindungen, gesenkt werden.

Die Prozentangaben in den nachfolgenden Beispielen beziehen sich jeweils auf das Gewicht; Teile sind Gewichtsteile.

### Beispiele

### Vernetzer 1

634,7 g (3,286 Equ NCO) Biuret des Hexamethylendiisocyanates (Desmodur N-3200®, Bayer AG) und 23,3 g (0,0105 Mol) eines auf n-Butanol gestarteten, monofunktionellen Ethylenoxid/Propylenoxid-Polyethers vom Molekülargewicht 2150 und einem Ethylenoxidgehalt von 80 % werden zusammen vorgelegt. Das Gemisch wird auf 95 bis 100°C erwärmt und 30 Minuten bei dieser Temperatur gerührt. Nach Abkühlen auf 60°C wird bei 60 bis 70°C mit 242 g (2,7817 Mol) Butanonoxim umgesetzt. Nach beendeter Zugabe wird auf 80 bis 85°C erwärmt und der NCO-Gehalt bestimmt. Sollwert: 2,0 %. Bei gleicher Temperatur wird die Kettenverlängererlösung aus 60,9 g (0,1542 Mol) einer 40 %igen wäßrigen Lösung des Natriumsalzes der β-Aminoethyl-β-aminopropionsäure und 100 ml demineralisiertem Wasser zugegeben, 15 Minuten ohne Heizung nachgerührt, anschließend innerhalb ca. 5 Minuten mit 2000 ml demineralisiertem Wasser dispergiert und 4 Stunden ohne Heizung nachgerührt. Man erhält eine feinteilige Dispersion mit den folgenden Daten: Feststoffgehalt 30 %; Ionengehalt 15,2 meq COO⁻/100 g; Ethylenoxidgehalt 2,2 %.
Der pH-Wert beträgt 6,5.

### Vernetzer 2

367 g (1,782 Equ NCO) Biuret des Hexamethylendiisocyanates (Desmodur N-100®, Bayer AG) und 15,0 g (0,007 Mol) eines auf n-Butanol gestarteten, monofunktionellen Ethylenoxid/Propylenoxid-Polyethers vom Molekulargewicht 2150 und einem Ethylenoxidgehalt von 80 % werden zusammen vorgelegt. Das Gemisch wird auf 95 bis 100°C erwärmt und mit 190,0 g (1,68 Mol) Caprolactam so umgesetzt, daß sich die Temperatur bei 95 bis 100°C hält. Nach beendeter Zugabe wird 1 Stunde bei 100°C gerührt und der NCO-Gehalt bestimmt. Sollwert: 2,1 %. Bei gleicher Temperatur wird die Kettenverlängererlösung aus 43,5 g (0,230 Equ) einer 40 %igen wäßrigen Lösung des Natriumsalzes der β-Aminoethyl-β-aminopropionsäure und 90 ml demineralisiertem Wasser zugegeben, 15 Minuten ohne Heizung nachgerührt, anschließend innerhalb ca. 10 Minuten mit 1300 ml demineralisiertem Wasser dispergiert und 4 Stunden ohne Heizung nachgerührt. Man erhält eine feinteilige Dispersion mit den folgenden Daten: Feststoffgehalt 30 %; Ionengehalt 18,7 meq COO⁻/100 g; Ethylenoxidgehalt 2,0 %. Der pH-Wert beträgt 8.

### Vernetzer 3

202,7 g (1,038 Equ NCO) Trimerisat des Hexamethylendiisocyanates (Desmodur N-3300®, Bayer AG) und 19,5 g (0,0087 Mol) eines auf n-Butanol gestarteten, monofunktionellen Ethylenoxid/Propylenoxid-Polyethers vom Molekülargewicht 2150 und einem Ethylenoxidgehalt von 80 % werden zusammen vorgelegt. Das Gemisch wird auf 95 bis 100°C erwärmt und 30 Minuten bei dieser Temperatur gerührt. Nach Abkühlen auf 60°C wird bei 60 bis 70°C (0,8943 Mol) Butanonoxim umgesetzt. Nach beendeter Zugabe wird auf 80 bis 85°C erwärmt und der NCO-Gehalt bestimmt. Sollwert: 1,7 %. Bei gleicher Temperatur wird die Kettenverlängererlösung aus 11,2 g (0,029 Mol) einer 40 %igen wäßrigen Lösung des Natriumsalzes der β-Aminoethyl-β-aminopropionsäure und 2,4 g (0,014 Mol) Isophorondiamin in 30 ml demineralisiertem Wasser zugegeben, 15 Minuten ohne Heizung nachgerührt, anschließend innerhalb ca. 5 Minuten mit 702 ml demineralisiertem Wasser dispergiert und 4 Stunden ohne Heizung nachgerührt. Man erhält eine feinteilige Dispersion mit den folgenden Daten: Feststoffgehalt 30 %; Ionengehalt 9,2 meq COO⁻/100 g; Ethylenoxidgehalt 5,2 %. Der pH-Wert beträgt 6,5.

### Vernetzer 4

177,4 g (0,9184 Equ NCO) Biuret des Hexamethylendiisocyanates (Desmodur N-3200®, Bayer AG), 22,9 g (0,0103 Mol) eines auf n-Butanol gestarteten, monofunktionellen Ethylenoxid/Propylenoxid-Polyethers vom Molekülargewicht 2150 und einem Ethylenoxidgehalt von 80 %, 5,9 g (0,0655 Mol) 1,4-Butylenglykol und 16,9 g (0,0278 Mol) eines Umsetzungsproduktes aus 1 Mol Buten-2-diol-1.4, 4 Molen Propylenglykol und einem Mol Natriumbisulfit werden zusammen vorgelegt. Das Gemisch wird auf 100°C erwärmt und 120 Minuten bei dieser Temperatur gerührt und der NCO-Gehalt bestimmt. Sollwert: 13,6 %. Nach Abkühlen auf 70°C wird bei 70 bis 80°C mit 66,1 g (0,7598 Mol) Butanonoxim umgesetzt und 10 Minuten nachgerührt. Nach IR-Kontrolle ist kein NCO mehr vorhanden.

Nun wird mit 663 ml demineralisiertem Wasser dispergiert und 4 Stunden ohne Heizung nachgerührt. Man erhält eine feinteilige Dispersion mit den folgenden Daten: Feststoffgehalt 30 %; Ionengehalt 9,8 meq SO₃⁻/100 g; Ethylenoxidgehalt 6,8 %. Der pH-Wert beträgt 6,5.

Im weiteren wurden folgende Komponenten verwendet:
Acrylatbinder: 40 %ige wäßrige Dispersion eines Acrylnitril/Butylacrylat/Styrol/Acrylsäure-Emulsionscopolymerisats (4:83:8:3 Teile)
Polyurethanbinder: 40 %ige wäßrige Dispersion eines Polyurethans auf Basis Hexamethylendiisocyanat (®Acramin PUD, Bayer AG)
Verdickerlösung: 4 %ige wäßrige Lösung eines Cellulosederivats (®Natrosol MR, Hercules Powder)
Emulgator L: 42 %ige wäßrige Emulgatorlösung
(®Emulgator L, Bayer AG)
Emulgator VA: 46 %ige wäßrige Emulgatorlösung
(®Emulgator VA, Bayer AG)
Emulgator WN: 90 %ige wäßrige Lösung eines auf einer phenolischen Komponente gestarteten Ethylenoxid-Polyethers mit einem mittleren Molekülargewicht von etwa 900 (®Emulgator WN, Bayer AG)
Acrylsäure/Acrylamid-Copolymerisatdispersion: 29 %ige Dispersion des Ammoniumsalzes eines schwach vernetzten Acrylsäure/Acrylamid-Copolymerisats in einem isoparaffinischen Kohlenwasserstoff (®Acrakonz BN, Bayer AG)
®Acramin Blau FBC: wäßrige Pigmentformierung auf Basis von Cu-Phthalocyanin, Bayer AG
®Solvesso 100: aromatische Kohlenwasserstoffmischung (Kp. 163-181°C) der Esso Chemie, Köln.
Melamin/Formaldehyd-Kondensat: ®Acrafix MF, Bayer AG

### Beispiel 1

In eine Druckpaste, bestehend aus einer praxisüblichen Öl-in-Wasser-Emulsion, werden nacheinander zugegeben:
6,0 bis 20,00 % eines handelsüblichen Acrylatbinder mit vernetzbaren Gruppen,
0,25 % eines Säurespenders (z.B. Diammoniumphosphatlösung 1:2 in Wasser),
0,1 bis 1,00 % eines Weichmachers (Silicon- oder Fettsäureesterbasis),
0,3 bis 2,00 % des beschriebenen Vernetzers und je nach Farbtiefe bis zu
5,00 % eines Kupferphthalocyanin-Pigmentteiges (C.I. Pigment Blue 15).

Die so erhaltene Druckpaste wird im Rotations-, Flach- oder Rouleauxdruck auf Baumwolle oder Mischtextilien abgedruckt. Nach dem Trocknen bei 80 bis 130°C wird anschließend bei 120 bis 150°C während 10 bis 4 Minuten vorzugsweise mittels Heißluft fixiert.

Man erzielt so einen farbigen Pigmentdruck mit guten Gebrauchsechtheiten, die den Echtheiten eines Druckes unter Mitverwendung eines Melamin-Formaldehyd-Kondensates ebenbürtig sind.

Ein Teil der Druckpaste wurde 4 Wochen bei 23°C gelagert. Der Druck wurde wiederholt; das Ergebnis war absolut identisch. Aussage: Lagerstabilität über 4 Wochen.

### Beispiel 2

Anstelle eines handelsüblichen Acrylatbinders werden 6 bis 20 % eines Butadienbinders eingesetzt. Man erhält so einen farbigen Pigmentdruck mit besonders weichem Griff bei sehr guten Gebrauchseigenschaften. Besonders echt sind die Drucke gegenüber einer chemischen Reinigung.

### Beispiel 3

Anstelle des Acrylatbinders werden 6 bis 20 % eines Polyurethanbinders eingesetzt. Man erhält einen farbigen Pigmentdruck mit sprungelastischen Eigenschaften bei guten Gebrauchsechtheiten.

### Beispiel 4

Anstelle der Öl-in-Wasser-Emulsion werden ca. 2 bis 4 % eines hochmoleknlaren synthetischen Mischpolymerisates aus Acrylsäure und Acrylamid oder eines Ethylen-Maleinsäure-Mischpolymerisates, jeweils vorliegend als Ammoniumsalz eingesetzt. Als Farbpigment wird eine 35 %ige Dispersion eines Rotpigments (P.R. 146) eingesetzt.

Ein Zellwollgewebe wird bedruckt, anschließend getrocknet und dann während 4 bis 10 Minuten bei 120 bis 150°C mittels Heißluft fixiert. Man erzielt Drucke mit sehr guten Gebrauchsechtheiten (Trocken- und Naßreibechtheiten, Haushaltswäsche 60 + 95°C).

### Beispiel 5

Der Ansatz entspricht dem Beispiel 4. Es werden jedoch anstelle des Rotpigmentes 10 bis 50 % einer Titandioxidzubereitung zugegeben. Als Bindemittel wird vorzugsweise eine 40 bis 50 %ige Polyurethandispersion verwendet.

Unter Hinzunahme des Vernetzers 1 werden nach dem Drucken auf Gewirken aus Baumwolle, Zellwolle oder Mischgeweben mit Synthesematerialien hochelastische Drucke erzielt, die nach dem Fixieren bei 120 bis 150°C während 4 bis 10 Minuten echte Weißdrucke ergeben.

### Beispiel 6

Gemäß der Druckpaste aus Beispiel 4 wurden unter Verwendung der in der nachfolgenden Tabelle aufgelisteten Vernetzer eingesetzt.

| | |
|---|---|
| Druckpasten nach Beispiel 4 | 99,7 bis 98 % |
| Vernetzer 2 | 0,3 bis 2 % |
| Vernetzer 3 | 0,3 bis 2 % |
| Vernetzer 4 | 0,3 bis 2 % |

Die Druckpasten wurden auf mercerisierte, gebleichte und auf nur mercerisierte Baumwollgewebe abgedruckt. Nach dem Trocknen und Fixieren durch Heißluft von 120 bis 180°C während 1 bis 10 Minuten erzielt man Drucke mit guten Lichtechtheiten.

Die Vernetzer 2, 3 und 4 erreichen das Echtheitsniveau von Vernetzer 1.

### Beispiel 7

In 50 Teile einer 3 %igen handelsüblichen hochmolekularen Hydroxyethylcellulose werden folgende Bestandteile eingerührt:
3,0 Teile einer 40 %igen Dispersion eines Kupferphthalocyaningrüns, P. Green 7,
0,1 bis 0,5 Teile einer Silicondispersion,
1,0 bis 3,0 Teile des Vernetzers 1 und
ca. 45 Teile Wasser.

Die fertige Druckpaste wird im Filmdruck auf Leinen abgedruckt, getrocknet und anschließend mit Heißluft fixiert. Man erhält Drucke mit guten Echtheiten.

### Beispiel 8

In eine Färbeflotte bestehend aus
40 bis 100 Teilen eines Copolymers aus Butylacrylat, Styrol, Acrylnitril und N-Methoxymethyl-Methacrylat,
1 bis 5 Teilen eines Säurespenders,
1 bis 3 Teilen einer organischen Säure und
5 bis 10 Teilen eines Wanderungsschutz- und Netzmittels werden
5 bis 20 Teile des Vernetzers 1 sowie
1 bis 20 Teile einer 38 %igen wäßrigen Zubereitung eines Phthalicyaninblaus
zugegeben.

Mit dieser Färbeflotte foulardiert man ein Baumwollgewebe, trocknet bei 80 bis 100°C und fixiert anschließend 3 bis 5 Minuten bei 140 bis 150°C mittels Heißluft. Man erhält eine Färbung mit verbesserten Wasch- und Reibechtheiten gegenüber üblichen Pigmentfärbungen.

### Vergleichsversuch

Beispiel 1 aus DE-OS 31 09 978 wurde exakt nachgestellt:
a) Umsetzung von dimerer Ölsäure mit Propylenoxid und Hexamethylendiisocyanat:
   565 Teile dimere Ölsäure werden im Autoklaven mit 4 Teilen KOH als Katalysator bei 130 bis 140°C mit 896 Teilen Propylenoxid umgesetzt.
   Daraufhin wird das Gemisch mit 12 Teilen Benzoylchlorid sauer eingestellt und zu 336 Teilen Hexamethylendiisocyanat, versetzt mit 0,15 Teilen Zinnoctoat, bei 60 bis 80°C zugetropft und 1 Stunde bei 80°C nachgerührt.
   Man erhält ein gelbes Produkt (Vernetzer) mit einem Isocyanatgehalt von 1,1 m Val/g und einer Viskosität bei 40°C von 2 840 mPa·s.
b) Herstellung der Druckpaste:
   In 115 Teile einer 6 %igen wäßrigen Lösung von polyacrylsaurem Ammonium rührt man nacheinander ein:
   - 620 Teile: Wasser
   - 40 Teile: einer 25 %igen wäßrigen Harnstofflösung
   - 40 Teile: eines mit 25 mol Ethylenoxid umgesetzten Talgfettalkohols
   - 120 Teile: einer 45 %igen wäßrigen Dispersion eines Terpolymerisates aus 70 % Butadien, 26 % Styrol, 3 % N-Methylolacrylamid und 1 % Acrylamid
   - 25 Teile: des gemäß a) hergestellten Vernetzers.

Einzelne Portionen der erhaltenen Zusammensetzung werden mit den in den Beispielen 1, 4, 5 und 7 verwendeten Pigmentpasten gemischt.

Drucke mit Vernetzer gemäß DE-OS 31 09 978 zeigen nur geringfügig bessere Echtheiten als Drucke ohne externe Vernetzer:
Werden die Druckpasten 1 Woche gelagert und der Druck danach wiederholt, so ergeben sich keine Echtheiten mehr. Das Echtheitsniveau ist dann identisch mit einem Vergleich ohne Vernetzer.

## Patentansprüche

1. Verwendung blockierter Polyisocyanate mit einem mittleren Molekulargewicht von 800 bis 25.000 und einem Gehalt an
- blockierten Isocyanatgruppen, berechnet als freies NCO und bezogen auf unblockiertes Polyisocyanat (d.h. Polyisocyanat vor der Blockierung) entsprechend einem NCO-Gehalt von 5 bis 20 Gew.-%,
- ionischen Gruppen von 1 bis 75 Milliäquivalenten (meq) pro 100 g blockiertem Polyisocyanat und
- Polyalkylenoxideinheiten von 1 bis 20 Gew.-%, bezogen auf blockiertes Polyisocyanat, erhältlich durch Umsetzung
a) organischer Polyisocyanate,
b) NCO-reaktiver Verbindungen enthaltend (potentielle) ionische Gruppen,
c) Polyalkylenether,
d) NCO-Blockierungsmittel und gegebenenfalls
e) weiterer, von b), c) und d) verschiedener NCO-reaktiver Verbindungen,
als Vernetzer für im Textildruck verwendete organische Bindemittel.

2. Verwendung nach Anspruch 1, wonach die blockierten Polyisocyanate ein mittleres Molekülargewicht von 1000 bis 10000 besitzen.

3. Verwendung nach Anspruch 1, wonach die blockierten Polyisocyanate einen NCO-Gehalt von 10 bis 20 Gew.-% besitzen (berechnet als freies NCO und bezogen auf unblockiertes Polyisocyanat).

4. Verwendung nach Anspruch 1, wonach die blockierten Polyisocyanate einen Gehalt an ionischen Gruppen von 2 bis 25 meq pro 100 g blockiertem Polyisocyanat besitzen.

5. Verwendung nach Anspruch 1, wonach die blockierten Polyisocyanate 1 bis 10 Gew.-% Polyethylenoxideinheiten enthalten.
